# EUROPÄISCHE PATENTSCHRIFT

(11) **EP 1 231 221 B1**
(45) Veröffentlichungstag und Bekanntmachung des Hinweises auf die Patenterteilung: **14.05.2003**
(21) Anmeldenummer: 02001929.5
(22) Anmeldetag: 31.01.2002
(51) Int. Cl.: C08F 8/12

(54) **Verfahren zur Herstellung von Polyvinylalkohol**
Process for the preparation of polyvinyl alcohol
Procédé de préparation d'alcool polyvinylique

(30) Priorität: 08.02.2001 DE 10105656
(43) Veröffentlichungstag der Anmeldung: 14.08.2002
(73) Patentinhaber: Wacker Polymer Systems GmbH & Co. KG, 84489 Burghausen (DE)
(72) Erfinder: Bauer, Werner, Dr., 84543 Winhöring (DE); Ball, Peter, Dr., 84547 Emmerting (DE); Tschirner, Peter, Dr., 84547 Emmerting (DE)
(74) Vertreter: Schuderer, Michael, Dr.

(56) Entgegenhaltungen:
- EP-A- 0 044 027
- DE-A- 1 909 170
- DE-A- 3 000 750
- GB-A- 692 324
- GB-A- 694 463
- GB-A- 749 458
- GB-A- 973 883
- GB-A- 1 456 164
- CHEMICAL ABSTRACTS, vol. 85, no. 4, 26. Juli 1976 (1976-07-26) Columbus, Ohio, US; abstract no. 22137g, Seite 22; Spalte 1; XP002195879 & RO 58 177 A (COMBINATUL CHIMIC) 15. Juni 1975 (1975-06-15)
- DATABASE WPI Section Ch, Week 198145 Derwent Publications Ltd., London, GB; Class A14, AN 1981-82262D XP002195880 & JP 56 120707 A (JAPAN SYNTHETIC RUBBER CO., LTD.), 22. September 1981 (1981-09-22)

## Beschreibung

Die Erfindung betrifft ein Verfahren zur Herstellung von Polyvinylalkohol mittels katalytischer Umesterung einer alkoholischen Polyvinylester-Lösung und anschließender Abtrennung des dabei gebildeten Polyvinylakohols.

Die Herstellung von Polyvinylalkohol (PVAL) durch Umesterung von Polyvinylestern, welche durch radikalische Polymerisation von Vinylestern erhalten werden, ist seit langem bekannt. Als Vinylester können Ester aliphatischer Carbonsäuren, wie beispielsweise Vinylacetat oder Vinylpropionat, eingesetzt werden. Die Umesterung erfolgt üblicherweise in Gegenwart einwertiger aliphatischer Alkohole, wie Methanol oder Ethanol. Die Reaktion kann entweder basisch oder sauer katalysiert erfolgen. Die erhaltenen Polyvinylalkohole werden hauptsächlich durch ihren Hydrolysegrad und ihre Viskosität in einer 4 Gew.-%-igen wässrigen Lösung beschrieben.

Anstelle des Hydrolysegrades findet man häufig auch die Angabe der sogenannten Verseifungszahl, welche die Menge an KOH in Milligramm pro Gramm PVAL wiedergibt, die für eine vollständige Spaltung aller übrigen Estergruppen nötig ist. Die Verseifungszahl gibt nur den Mittelwert des KOH-Verbrauches zur vollständigen Esterspaltung an. Es können bei gleichen gefundenen Verseifungszahlen deshalb deutlich unterschiedliche Breiten der Verseifungszahlverteilung auftreten. Sowohl die Breite der Verseifungszahlverteilung, als auch die Blockigkeit haben einen großen Einfluß auf die Qualität des PVAL, vor allem für den Einsatz als Schutzkolloid in Emulsions- und Suspensionspolymerisationen.

Abhängig vom Herstellungsverfahren gibt es bei gleicher Verseifungszahl und Viskosität dennoch deutliche Unterschiede im Aufbau der Polyvinylalkohole. Zum einen können die verbliebenen Estergruppierungen auf verschiedene Weise angeordnet sein, entweder in größeren Blöcken zusammengefasst oder statistisch verteilt. Beim Einsatz von basischen Katalysatoren werden eher blockige Polyvinylalkohole, beim Einsatz von sauren Katalysatoren eher Polyvinylalkohole mit statistischer Verteilung der verbliebenen Estergruppen erhalten. Auch Zusätze von anderen Lösemitteln, beispielsweise Wasser, haben einen Einfluß auf die Verteilung der Estergruppen im Polyvinylalkohol.

Ein etabliertes Verfahren zur Herstellung von Polyvinylalkohol ist das sogenannte Band-Verfahren, welches beispielsweise in der US-A 3,278,505 und der DE-A 2251603 beschrieben wird. Hierbei wird Lauge mit der im allgemeinen methanolischen Polyvinylacetat-Lösung schnell und intensiv gemischt und auf ein fortlaufendes Band aufgetragen. Die Mischung erstarrt zu einem Gel, welches am Ende des Bandes gebrochen und geschnitten wird. Dieses Granulat wird im allgemeinen mit Essigsäure neutralisiert und mit Methanol gewaschen. Dieses kontinuierliche Verfahren eignet sich besonders zur Herstellung von Polyvinylalkohol in großen Mengen. Von Vorteil ist die sehr wirtschaftliche Herstellung großer Mengen Polyvinylalkohol in konstanter Produktqualität. Nachteilig ist, dass das granulierte Gel schlecht neutralisierbar ist; damit verbunden ist eine Verbreiterung der Verseifungszahlverteilung. Das Verfahren ist nur bei der Produktion von großen Mengen wirtschaftlich. Somit prohibitiv bei der Einführung innovativer, neuer und am Anfang der Produktion mengenmäßig kleiner Produkte. Nachteilig sind auch die hohen Anschaffungskosten und der große Platzbedarf der Anlage.

Ein dem Bandverfahren sehr ähnliches Verfahren ist das Extruderverfahren, welches beispielsweise in der EP-B 54716 und der EP-A 942008 beschrieben wird, und bei dem das Band durch einen geeigneten Extruder ersetzt wird. Dabei wird das Gel während der Reaktion im Extruder zerkleinert. Im Vergleich zum Bandverfahren können mit dem Extruder-Verfahren höher konzentrierte Polyvinylacetat-Lösungen verarbeitet werden. Nachteilig sind die noch höheren Anschaffungskosten im Vergleich zum Bandverfahren, bei gleichen Kapazitäten.

Ein weiteres beschriebenes kontinuierliches Verfahren ist die Suspensionsumesterung von Polyvinylacetat, beispielsweise in der US-A 3,487,060. Hierbei wird die Polyvinylacetat- und die Katalysatorlösung kontinuierlich zu einem bewegtem Alkoholysegemisch gegeben und eine Aufschlämmung von Polyvinylalkohol in Methanol und Methylacetat kontinuierlich aus diesem Alkoholysegemisch entfernt. Durch geeignete Prozeßführung läßt sich dabei die Gelbildung weitestgehend vermeiden. Im Vergleich zu den anderen kontinuierlichen Verfahren sind die Anschaffungskosten hier sehr gering. Allerdings ist die Einhaltung eines bestimmten Hydrolysegrades schwierig.

Als nicht kontinuierliches Verfahren hat sich hauptsächlich die Umesterung in einem Kneter etabliert, welche beispielsweise in der DE-A 3000750 beschrieben ist. Hierbei wird eine hochkonzentrierte, im allgemeinen methanolische Polyvinylacetat-Lösung mit dem Umesterungskatalysator gemischt. Das entstehende Gel wird während der Reaktion fortwährend zerkleinert. Nach dem Abbruch der Reaktion mit Säure wird im Kneter gebildetes Methylacetat und Methanol abdestilliert. Der Kneter ist sehr gut geeignet zur Produktion von mengenmäßig kleinen Polyvinylalkohol-Spezialitäten. Große Mengen eines Produktes sind schwer kostengünstig zu produzieren. Da der Kneter ein schlechtes Mischorgan ist, sowohl für das Einmischen des Katalysators als auch für die Säurezugabe bei Neutralisation, werden Polyvinylalkohole mit sehr breiten Verseifungszahlverteilungen erhalten.

Die Umesterung von Polyvinylacetat zu Polyvinylalkohol kann auch in einem normalen Rührkessel stattfinden, wie dies beispielsweise in der DE-A 2304684 beschrieben wird. Hierbei werden verdünnte, im allgemeinen methanolische Polyvinylacetatlösungen mit dem Katalysator vermischt. Durch fortwährendes Rühren wird das Gel zerkleinert und es wird eine sehr feinteilige Suspension von Polyvinylalkohol in Methanol/Methylacetat erhalten. Durch die schnelle Verteilung des Katalysators in der alkoholischen Lösung und den gleichmäßigen Abbruch der Reaktion mit einer Säure in der feinteiligen Suspension können Polyvinylalkohole mit sehr guter Qualität und enger Verseifungszahlverteilung erhalten werden. Neben dem, durch Abtrennung des Lösungsmittelgemisches, festen Polyvinylalkohol, kann durch Abdestillieren von Methylacetat/Methanol und gleichzeitiger Zugabe von Wasser eine wässrige Polyvinylalkohol-Lösung erhalten werden. Nachteilig ist, dass auf Grund der schlechten Filtrierbarkeit der feinteiligen Suspension die Herstellung von festem Polyvinylalkohol nach diesem Verfahren nicht wirtschaftlich ist. Darüberhinaus müssen große Mengen Lösungsmittel aus dem Rührkessel abdestilliert und einer destillativen Aufarbeitung zugeführt werden. Diese zweimalige Destillation stellt einen zeit- und energieintensiven Prozeß dar. Zur Trennung von Methylacetat und Methanol sind außerdem mehrere Destillationskolonnen erforderlich.

Aus der DD-A 251683 ist bekannt, dass die Produktion der wässrigen Lösung beschleunigt werden kann, indem der Polyvinylalkohol aus dem Reaktionsgemisch abgetrennt wird, und mit einer Restfeuchte von mehr als 50 Gew.-% in den mit Wasser gefüllten Lösekessel eingetragen wird. Durch Anlegen von Vakuum und Einleitung von überhitztem Wasserdampf, bei gleichzeitiger Beheizung des Lösekessels, werden Methanol, Methylacetat und Wasser abdestilliert und der Polyvinylalkohol geht in Lösung. Problematisch bleibt weiterhin die schlechte Filtrierbarkeit der Polyvinylalkoholsuspension. Nachteilig bei diesem Verfahren ist auch, dass große Mengen Filtrat wiederaufgearbeitet werden müssen.

Es ist bekannt, dass durch Zusatz von aliphatischen oder cycloaliphatischen Kohlenwasserstoffen die Filtrierbarkeit der erhaltenen Polyvinylalkoholsuspension deutlich verbessert werden kann. Beispielsweise ist in der DD-A 238054 beschrieben, dass durch Zusatz von 20-50 % von Kohlenwasserstoffen mit einer Kettenlänge von 5 bis 10 C-Atomen eine methanolische Polyvinylacetatlösung heterogen eingestellt wird und die alkalisch katalysierte Umesterung in diesem Gemisch zu feinkörnigen, gut filtrierbaren Polyvinylalkoholsuspensionen führt. Die erhaltenen teilverseiften Polyvinylalkohole zeigen besonders gute Eigenschaften als Schutzkolloide. Nachteilig ist dabei, dass die erhaltenen Gemische aus Kohlenwasserstoff, Methanol und gebildetem Methylacetat sehr schwer wieder aufzuarbeiten sind.

Aufgabe der Erfindung war die Entwicklung eines Verfahrens zur Herstellung von Polyvinylalkohol, bei dem die Filtrierbarkeit der erhaltenen Polyvinylalkohol-Suspension verbessert wird. Darüberhinaus war es Aufgabe der Erfindung ein Verfahren zu entwickeln, bei dem keine großen Lösemittelmengen zur destillativen Aufarbeitung anfallen.

Gegenstand der Erfindung ist ein Verfahren zur Herstellung von Polyvinylalkohol mittels katalytischer Umesterung einer alkoholischen Polyvinylester-Lösung und anschließender Aufarbeitung mittels Abtrennung des dabei gebildeten Polyvinylalkohols, dadurch gekennzeichnet, dass
a) vor Beginn der Umesterung der Polyvinylester-Lösung der Essigsäureester des Alkohols, der als Lösungsmittel eingesetzt wird, in einer solchen Menge zugegeben wird, dass dessen Gehalt 5 bis 70 Gew.-%, bezogen auf die Gesamtmenge aus alkoholischem Lösungsmittel und dessen Essigsäureester, beträgt, und
b) der bei der Umesterung gebildete Polyvinylalkohol von der flüssigen Phase abgetrennt wird, und die flüssige Phase in solchen Anteilen zur Umesterung zurückgeführt wird, dass der Anteil des Essigsäureesters des Alkohols, der als Lösungsmittel verwendet wird (nachfolgend Essigsäureester genannt), im Alkohol/Essigsäureester-Gemisch bei der Umesterung im obengenannten Bereich bleibt.

Geeignete Polyvinylester sind die Homo- und Misch-Polymerisate mit Vinylestern von aliphatischen Carbonsäuren mit 1 bis 12 C-Atomen wie Vinylformiat, Vinylacetat, Vinylpropionat, sowie Vinylester von alpha-verzweigten Carbonsäuren mit 9 bis 10 C-Atomen (VeoVa 9 oder VeoVa 10, Handelsnamen der Firma Shell). Gegebenenfalls können die Polymerisate auch noch bis zu 50 Gew.-% Comonomereinheiten enthalten, welche sich von weiteren, mit Vinylestern copolymerisierbaren, ethylenisch ungesättigten Comonomeren ableiten. Beispielsweise Olefine wie Ethylen und Propylen, sowie ethylenisch ungesättigte Mono- und Dicarbonsäuren wie Acrylsäure oder Methacrylsäure, ethylenisch ungesättigte Carbonsäureamide wie Acrylamid und N-Methylolacrylamid, sowie Isopropenylacetat. Am meisten bevorzugt wird Polyvinylacetat.

Geeignete alkoholische Lösungsmittel für die Polyvinylester sind einwertige, aliphatische Alkohole mit 1 bis 4 C-Atomen oder deren Gemische, vorzugsweise Methanol oder Ethanol, besonders bevorzugt Methanol. Der Gehalt an Polyvinylester in der Lösung beträgt 20 bis 80 Gew.-%, vorzugsweise 30 bis 70 Gew.-%. Vor Beginn der Umesterung wird der Polyvinylester-Lösung Essigsäureester und gegebenenfalls Alkohol in einer solchen Menge zugegeben, dass der Essigsäureester-Gehalt 5 bis 70 Gew.-%, vorzugsweise 15 bis 40 Gew.-%, besonders bevorzugt 25 bis.35 Gew.-% beträgt, jeweils bezogen auf die Gesamtmenge aus alkoholischem Lösungsmittel und Essigsäureester. Der Gehalt an Polyvinylester bezogen auf die Gesamtmenge des Reaktionsgemisches beträgt 2 bis 75 Gew.-%, vorzugsweise 5 bis 60 Gew.-%. Wenn Methanol als Lösungsmittel eingesetzt wird, wird Methylacetat als Essigsäureester zugegeben; im Fall von Ethanol als Lösungsmittel, wird Ethylacetat als Essigsäureester zugegeben. Vorzugsweise erfolgt die Zugabe von Essigsäureester in Form eines Alkohol/Essigsäureester-Gemisches, welches als Filtrat bei der Aufarbeitung eines vorhergehenden Ansatzes erhalten wurde (diskontinuierliche Fahrweise) oder bei der Aufarbeitung des Endproduktes (Polyvinylalkohol) abgetrennt wird (kontinuierliche Fahrweise).

Zur Initiierung der Umesterung werden die dabei üblichen sauren oder alkalischen Katalysatoren eingesetzt. Saure Katalysatoren sind beispielweise starke Mineralsäuren, wie Salzsäure oder Schwefelsäure, oder starke organische Säuren, wie aliphatische oder aromatische Sulphonsäuren. Bevorzugt werden alkalische Katalysatoren eingesetzt. Dies sind beispielweise die Hydroxide, Alkoholate und Carbonate von Alkali- oder Erdalkalimetallen. Bevorzugt werden die Hydroxide von Lithium, Natrium und Kalium; besonders bevorzugt wird Natriumhydroxid. Die alkalischen Katalysatoren werden in Form deren wässrigen oder alkoholischen Lösungen eingesetzt, vorzugsweise in alkoholischer Lösung, und besonders bevorzugt im gleichen Alkohol gelöst, welcher zur Lösung des Polyvinylesters eingesetzt wird. Die eingesetzten Mengen an alkalischem Katalysator betragen im allgemeinen 0.2 bis 20.0 Mol-%, bezogen auf Polyvinylester.

Die Umesterung wird im allgemeinen bei Temperaturen von 20°C bis 60°C, vorzugsweise 30°C bis 40°C, durchgeführt. Bei diskontinuierlicher Fahrweise wird die alkoholische Polyvinylester-Lösung einem Reaktionsgefäß zugeführt, im allgemeinen einem Rührkessel oder einem Kneter, und Essigsäureester in einer solchen Menge zugegeben, dass die obengenannten Mengenverhältnisse von Alkohol zu Essigsäureester resultieren. Vorzugsweise wird dazu das Filtrat von vorhergehenden Chargen eingesetzt, und gegebenenfalls weiterer Alkohol oder Essigsäureester zugegeben um das gewünschte Mengenverhältnis einzustellen. Gegebenenfalls kann der Ansatz auch mit Filtrat oder Alkohol überschichtet werden, unter Beachtung der genannten Mengenverhältnisse von Alkohol zu Essigsäureester im Reaktionsgefäß.

Durch Zugabe der Katalysatorlösung wird die Umesterung initiiert. Bei Erreichen des gewünschten Hydrolysegrades, im allgemeinen zwischen 70 und 100 Mol-%, wird die Umesterung abgebrochen. Bei sauer katalysierter Umesterung erfolgt der Abbruch durch Zugabe von alkalischen Reagentien. Dies sind beispielweise die Hydroxide, Alkoholate und Carbonate von Alkali- oder Erdalkalimetallen. Bevorzugt werden die Hydroxide von Lithium, Natrium und Kalium; besonders bevorzugt wird Natriumhydroxid. Bei der bevorzugten alkalisch katalysierten Umesterung erfolgt der Abbruch durch Zugabe von sauren Reagentien, wie Carbonsäuren oder Mineralsäuren. Bevorzugt werden relativ starke Carbonsäuren und Mineralsäuren, vorzugsweise mit einem pKs-Wert von kleiner als 4.5, besonders bevorzugt mit einem pKs-Wert kleiner als 2.5. Geeignete Mineralsäuren sind beispielsweise . Salzsäure, Schwefelsäure und Salpetersäure; geeignete Carbonsäuren sind beispielsweise Oxalsäure, Ameisensäure, aliphatische und aromatische Sulfonsäuren und Halogencarbonsäuren, wie Mono-, Di- oder Trichloressigsäure.

Nach Beendigung der Umesterungsreaktion wird der bei der Umesterung gebildete Polyvinylalkohol von der flüssigen Phase abgetrennt. Dies kann mittels gebräuchlicher Vorrichtungen zur Fest/Flüssig-Trennung erfolgen, beispielsweise mittels Zentrifugation oder Filtration. Das dabei gewonnene Filtrat wird vorzugsweise zur Produktion der nachfolgenden Chargen in das Reaktionsgefäß zurückgeführt. Die Rückführungsrate hängt dabei vom eingesetzten Alkohol/Essigsäureester-Verhältnis ab. Im allgemeinen werden 10 bis 90 Gew.-%, vorzugsweise 50 bis 80 Gew.-% des Filtrats in nachfolgenden Chargen wiederverwendet.

Der Polyvinylalkohol-Filterkuchen kann in bekannter Weise aufgearbeitet werden. Beispielsweise mittels Trocknung und Entfernung von Restanteilen des Alkohol/Essigsäureester-Gemisches während des Trocknungsvorgangs. Der Polyvinylalkohol-Filterkuchen kann auch in Wasser aufgenommen werden, üblicherweise unter Herstellung einer wässrigen Lösung mit 5 bis 80 Gew.-%, bevorzugt 10 bis 50 Gew.-%, besonders bevorzugt 10 bis 30 Gew.-% Polyvinylalkoholanteil und anschließender Vakuumbehandlung der Lösung und/oder Strippen der Lösung, durch Überleiten oder Durchleiten inerter Gase wie Wasserdampf, zur Entfernung von Restanteilen an Alkohol und Essigsäureester.

Bei kontinuierlicher Fahrweise, im allgemeinen auf dem Band, im Kneter oder Extruder, werden ebenfalls die alkoholische Polyvinylester-Lösung und der Essigsäureester in einer solchen Menge zugegeben, dass die obengenannten Mengenverhältnisse von Alkohol zu Essigsäureester resultieren. Vorzugsweise wird zur Essigsäureester-Zugabe das bei der Aufarbeitung des Endproduktes abgetrennte Alkohol/Essigsäurester-Gemisch zugegeben, und gegebenenfalls weiterer Alkohol oder Essigsäureester zugegeben um das gewünschte Mengenverhältnis einzustellen. Die Zugabe des Katalysators und der Reaktionsabbruch erfolgen analog der diskontinuierlichen Fahrweise. Nach Beendigung der Reaktion wird der Polyvinylalkohol von der flüssigen Phase abgetrennt.

Dies kann analog der für diskontinuierliche Fahrweise beschriebenen Vorgehensweise erfolgen oder mittels Destillation. Das dabei gewonnene Alkohol/Essigsäureestergemisch kann in den bei diskontinuierlicher Fahrweise genannten Mengen wieder zurückgeführt werden.

Aufgrund des Zusatzes von Essigsäureester vor Beginn der Umesterung werden Produkte erhalten, welche zu besser filtrierbaren Polyvinylalkohol-Suspensionen führen. Der Hauptvorteil des Verfahrens liegt darin, dass bei der Umesterung in einem Alkohol/Essigsäureester-Gemisch das, bei der Aufarbeitung des Polyvinylalkohols anfallende, Alkohol-Essigsäureester-Gemisch wieder als Reaktionsmedium eingesetzt werden kann, und damit die Aufarbeitung großer Mengen von Lösungsmittel vermieden werden kann. Zusätzlich kann durch die bevorzugte Verwendung von starken Säuren bei der Neutralisation das Entstehen von Puffersystemen im abgetrennten Alkohol/Essigsäureestergemisch vermieden werden. Solche Puffersysteme würden bei der Wiederverwendung des abgetrennten Lösungsmittelgemisches als Reaktionsmedium zu erhöhtem Laugenbedarf führen. Dadurch kann der erhaltene Polyvinylalkohol einen erhöhten Gehalt an Restsalzen aufweisen, welcher sich häufig störend auf die Anwendung des Polyvinylalkohols, beispielsweise als Schutzkolloid in Emulsions- und Suspensionspolymerisation, auswirkt.

Die nachfolgenden Beispiele dienen der weiteren Erläuterung der Erfindung.

### Beispiel 1:

### (Verhältnis Methanol: Methylacetat = 70 : 30)

In einer 3 Liter Laborapparatur wurden 611 g einer 62 Gew.-%-igen, methanolischen Polyvinylacetatlösung (Viskosität bestimmt nach Methode Höppler = 4.3 mPas, 10-%-ig in Ethylacetat) mit 320 g Methanol, 335 g Methylacetat und 3 g Wasser verrührt. Nach Erhalt einer homogenen Lösung wurden 183 g Methanol bei stehendem Rührer überschichtet. Danach wurden 82 g einer 2.45 Gew.-%-igen Lösung von NaOH in Methanol zugegeben, worauf der Rührer wieder angestellt wurde. Bei 30°C wurde die Lösung nach 12.5 Minuten dick und das gebildete Gel wurde durch Hochstellen der Rührerdrehzahl zerkleinert.
42 Minuten nach dem Gelpunkt wurde zur feinteiligen Suspension konzentrierte Salzsäure zugegeben, bis die noch vorhandene Natronlauge neutralisiert war. Der gebildete Polyvinylalkohol ließ sich sehr gut über einen Textilfilter abnutschen. Innerhalb von 5 Minuten wurde ein rieselfähiger Polyvinylalkohol mit einem Festgehalt von 36 Gew.-% erhalten.
Nach dem Trocknen hatte der Polyvinylalkohol eine Verseifungszahl von 140 mg KOH g PVAL und eine Viskosität bestimmt nach Methode Höppler von 4.1 mPas (4 Gew.-%-ig in Wasser).
Das Filtrat wurde aufgefangen, analysiert und im Folgeansatz eingesetzt. Die Zusammensetzung des Filtrats wurde aus der Dichte bestimmt.

### Beispiele 2 bis 5:

### (Verhältnis Methanol: Methylacetat = 70 : 30)

Jeweils 611 g einer 62 Gew.-%-ige, methanolischen Polyvinylacetatlösung und die in Tabelle 1 angegebene Menge an Filtrat, Methanol und Methylacetat wurden vorgelegt und zu einer homogenen Lösung verrührt. Es wurde analog Beispiel 1 mit 183 g Methanol überschichtet, und 82 g einer 2.45 Gew.-%-igen methanolischen NaOH zugegeben. Der dabei resultierende Gelpunkt GP und der Zeitpunkt N der Neutralisation sind in der Tabelle 1 angegeben. Die Aufarbeitung des Ansatzes und Rückführung des Filtrats erfolgte analog Beispiel 1.

Die Versuchsergebnisse der Serie von Beispiel 1 bis Beispiel 5 sind in Tabelle 1 aufgelistet:
Die Beispiele 1 bis 5 zeigen, dass das Filtrat ohne gravierende Rezepturänderung immer wieder einsetzbar ist und die Reaktionszeiten (GP, N) nahezu identisch bleiben. Begrenzt wird die Einsatzmenge des Filtrats lediglich durch die enthaltene Methanolmenge oder Methylacetatmenge.
Es wurden sehr einheitliche Produkte mit nahezu gleicher Verseifungszahl erhalten. Auch der Aschegehalt im Polyvinylalkohol, welcher als Maß für die Nebenproduktbildung dient, blieb nahezu konstant.

**Tabelle 1:**

| Bsp. | MeOH:MeAc Filtrat [Gew%] | H₂O im Filtrat [Gew%] | Filtratmenge [g] | MeOH-Zugabe [g] | MeAc-Zugabe [g] | GP [min] | N nach GP [min] | VZ PVAL [mgKOH/g] | Asche PVAL [Gew%] |
|---|---|---|---|---|---|---|---|---|---|
| 1 | | | | 320 | 335 | 12.5 | 42 | 140 | 0.4 |
| 2 | 50:50 | 1.2 | 640 | 0 | 15 | 13.5 | 42 | 142 | 0.7 |
| 3 | 52.5:47.5 | 0.88 | 560 | 26 | 67 | 13.0 | 42 | 141 | 0.6 |
| 4 | 50.7:49.3 | 0.65 | 631 | 0 | 23 | 13.5 | 42 | 144 | 0.5 |
| 5 | 50.9:49.1 | 1.41 | 570 | 30 | 55 | 15.0 | 42 | 133 | 0.6 |

### Beispiel 6

### (Verhältnis Methanol: Methylacetat = 70 : 30)

In einer 3 Liter Laborapparatur wurden 611 g einer 62 Gew.-%-igen, methanolischen Polyvinylacetatlösung (Viskosität bestimmt nach Methode Höppler = 4.3 mPas, , 10-%-ig in Ethylacetat) mit 320 g Methanol, 335 g Methylacetat und 3 g Wasser verrührt. Nach Erhalt einer homogenen Lösung wurde mit 183 g Methanol bei stehendem Rührer überschichtet. Danach wurden 82 g einer 2.45 Gew.-%-igen Lösung von NaOH in Methanol zugegeben, und der Rührer wieder angestellt. Bei 30°C wurde die Lösung nach 13 Minuten dick, und das gebildete Gel wurde durch Hochstellen der Rührerdrehzahl zerkleinert.
40 Minuten nach dem Gelpunkt (GP) wurde zur feinteiligen Suspension Oxalsäure zugegeben, bis die noch vorhandene Natronlauge neutralisiert war. Der gebildete Polyvinylalkohol ließ sich sehr gut über einen Textilfilter abnutschen. Innerhalb von 5 Minuten wurde ein rieselfähiger Polyvinylalkohol mit einem Festgehalt von 37 Gew.-% erreicht.
Nach dem Trocknen wurde ein Polyvinylalkohol mit einer Verseifungszahl von 139 mg KOH / g PVAL, und einer Viskosität bestimmt nach Methode Höppler von 4.2 mPas (4 Gew.-%-ig in Wasser) erhalten.
Das Filtrat wurde aufgefangen, analysiert und im Folgeansatz (Beispiel 7) eingesetzt. Die Zusammensetzung des Filtrats wurde aus der Dichte bestimmt.

### Beispiel 7

### (Verhältnis Methanol: Methylacetat = 70 : 30)

611 g einer 62 Gew.-%-ige, methanolischen Polyvinylacetatlösung und die in Tabelle 2 angegebene Menge an Filtrat und Methylacetat wurden vorgelegt und zu einer homogenen Lösung verrührt. Es wurde analog Beispiel 6 mit 183 g Methanol überschichtet, und 82 g einer 2.45 Gew.-%-igen methanolischen NaOH zugegeben. Der dabei resultierende Gelpunkt GP und der Zeitpunkt N der Neutralisation, sowie die Aufarbeitung des Ansatzes erfolgte analog Beispiel 6.
Der Polyvinylalkohol aus Beispiel 7 war ebenfalls sehr gut filtrierbar.

Die Versuchsergebnisse von Beispiel 6 und Beispiel 7 sind in Tabelle 2 aufgelistet:
Bei Wiederverwendung des Filtrats in Beispiel 7 blieben die Reaktionszeiten (GP, N) nahezu identisch. Es wurden sehr einheitliche Produkte mit nahezu gleicher Verseifungszahl erhalten.

**Tabelle 2:**

| Bsp. | MeOH:MeAc Filtrat [Gew%] | Filtratmenge [g] | MeOH-Zugabe [g] | MeAc-Zugabe [g] | GP [min] | N nach GP [min] | VZ PVAL [mg KOH/g] |
|---|---|---|---|---|---|---|---|
| 6 | | | 320 | 335 | 12 | 40 | 139 |
| 7 | 52.1:47.9 | 614 | 0 | 41 | 13.5 | 42 | 137 |

### Beispiele 8 bis 10:

Es wurde analog Beispiel 6 vorgegangen, wobei 611 g einer 62 Gew.-%-igen, methanolischen Polyvinylacetatlösung und 183 g Methanol zum Überschichten eingesetzt wurden. Gegenüber Beispiel 6 wurde die Methylacetat-Menge variiert.
Die Polyvinylalkohole aus den Beispielen 8 bis 10 waren sehr gut filtrierbar.

### Vergleichsbeispiel 1:

Es wurde analog Beispiel 6 vorgegangen, mit dem Unterschied, dass ein Methanol/Methylacetat-Verhältnis von 96 : 4 eingestellt wurde.

Die Ergebnisse in Tabelle 3 zeigen, dass das Verhältnis von Alkohol (Methanol) zu Essigsäureester (Methylacetat) in einem breiten Bereich variiert werden kann. Beträgt der Methylacetat-Gehalt im Gemisch weniger als 5 Gew.-% wird die Filtrierbarkeit nicht verbessert. Je höher der Gehalt an Methylacetat im Gemisch ist, desto mehr Lauge wird zur Umesterung benötigt, und umso mehr Salz wird gebildet, das heißt der Restaschegehalt des Polyvinylalkohols nimmt zu.

**Tabelle 3:**

| Bsp. | MeOH.:MeAc Ansatz [Gew%] | MeOH [g] | MeAc [g] | Lauge [g]. | GP [min] | N nach GP [min] | VZ PVAL [mg KOH/g] | Filtrierbarkeit |
|---|---|---|---|---|---|---|---|---|
| 6 | 70 : 30 | 320 | 335 | 82 | 12 | 40 | 139 | +++ |
| 8 | 85 : 15 | 480 | 175 | 72 | 18.5 | 55 | 138 | ++ |
| 9 | 45 : 55 | 0 | 655 | 96 | 5 | 120 | 220 | +++ |
| 10 | 45 : 55 | 0 | 655 | 120 | 5 | 40 | 130 | +++ |
| V1 | 96 : 4 | 600 | 50 | 55 | 25 | 25 | 136 | - |

### Beispiel 11:

### (Verhältnis Methanol: Methylacetat = 85 : 15) (Gehalt an Polyvinylacetat: 30 Gew.-% bezogen auf die Gesamtmenge an Reaktionsgemisch)

In einem 140 Liter Rührkessel wurden 45.9 kg einer 62 Gew.-%-igen, methanolischen Polyvinylacetatlösung (Viskosität bestimmt nach Methode Höppler = 4.4 mPas, 10 %-ig in Ethylacetat) mit 18.9 kg Methanol, 9.9 kg Methylacetat und 0.24 kg Wasser verrührt. Nach Erhalt einer homogenen Lösung wurden 13.8 kg Methanol bei stehendem Rührer überschichtet. Danach wurden 4.65 kg einer 2.45 Gew.-%-igen Lösung von NaOH in Methanol zugegeben, und der Rührer wieder angestellt. Bei 30°C wurde die Lösung nach 19 Minuten dick und das gebildete Gel wurde durch den Rührer zerkleinert.
38 Minuten nach dem Gelpunkt wurde zur feinteiligen Suspension Oxalsäure zugegeben, bis die noch vorhandene Natronlauge neutralisiert war. Der gebildete Polyvinylalkohol ließ sich sehr gut über eine Druckfilternutsche filtrieren. Es wurde ein feuchter Polyvinylalkohol mit einem Festgehalt von 38 Gew.-% erhalten.
Nach dem Trocknen wurde ein Polyvinylalkohol mit einer Verseifungszahl von 144 mg KOH / g PVAL und einer Viskosität bestimmt nach Methode Höppler von 4.25 mPas (4 Gew.-%-ig in Wasser) erhalten.

### Beispiel 12:

### (Verhältnis Methanol: Methylacetat = 70 : 30) (Gehalt an Polyvinylacetat: 30 Gew.-% bezogen auf die Gesamtmenge an Reaktionsgemisch)

Es wurde analog Beispiel 11 vorgegangen, jedoch mit 10.2 kg Methanol und 18.6 kg Methylacetat vermischt. Die Menge an 2.45 Gew.-%-iger methanolischer Lauge betrug 6.15 kg. Der Gelpunkt wurde nach 12 Minuten erreicht, die Neutralisation 50 Minuten nach dem Gelpunkt. Die Filtration erfolgte analog Beispiel 11. Die Verseifungszahl des Polyvinylalkohols war 133 mg KOH / g PVAL, die Viskosität bestimmt nach Methode Höppler 4.35 mPas (4 Gew.-%-ig in Wasser).

### Beispiel 13:

### (Verhältnis Methanol: Methylacetat = 70 : 30) (Gehalt an Polyvinylacetat: 15 Gew.-% bezogen auf die Gesamtmenge an Reaktionsgemisch)

Es wurde analog Beispiel 11 vorgegangen, jedoch 25 kg einer 62 Gew.-%-igen, methanolischen Polyvinylacetatlösung mit 34.2 kg Methanol und 26.0 kg Methylacetat vermischt. Die Menge an methanolischer Lauge betrug 4.8 kg. Der Gelpunkt wurde nach 22 Minuten erreicht, die Neutralisation 30 Minuten nach dem Gelpunkt. Die Filtration erfolgte analog Beispiel 11. Die Verseifungszahl des Polyvinylalkohols war 127 mg KOH / g PVAL, die Viskosität bestimmt nach Methode Höppler 4.3 mPas (4 Gew.-%-ig in Wasser).

Die Versuchsergebnisse der Beispiele 11 bis 13 sind in Tabelle 4 aufgelistet und zeigen, dass auch im technischen Maßstab eine Verbesserung der Filtrierbarkeit resultiert, und dass der Gehalt an Polyvinylacetat an der Gesamtmenge des Reaktionsgemisches variiert werden kann.

**Tabelle 4:**

| Bsp. | MeOH:MeAc [Gew%] | MeOH [kg] | MeAc [kg] | Gehalt an PVAc [Gew.%] | Lauge [kg] | GP [min] | N nach GP [min] | VZ PVAL [mg KOH/g] | Filtrierbarkeit |
|---|---|---|---|---|---|---|---|---|---|
| 11 | 85 : 15 | 18.9 | 9.9 | 30 | 4.65 | 19 | 38 | 144 | +++ |
| 12 | 70 : 30 | 10.2 | 18.6 | 30 | 6.15 | 12 | 50 | 133 | +++ |
| 13 | 70 : 30 | 34.2 | 26.0 | 15 | 4.80 | 22 | 30 | 127 | +++ |

### Vergleichsbeispiel 2:

### (Ansatz ohne Methylacetat)

In einer 3 Liter Laborapparatur wurden 611 g einer 62 Gew.-%-igen, methanolischen Polyvinylacetatlösung (Viskosität bestimmt nach Methode Höppler = 4.3 mPas, 10 %-ig in Ethylacetat) mit 655 g Methanol und 3 g Wasser verrührt. Die homogenisierte Lösung wurde mit 183 g Methanol bei stehendem Rührer überschichtet. Dann wurden 48 g einer 2.45 Gew.-%-igen Lösung von NaOH in Methanol zugegeben, und der Rührer wieder angestellt. Bei 30°C wurde die Lösung nach 31 Minuten dick und das gebildete Gel wurde durch Erhöhen der Rührerdrehzahl auf 400 U/min zerkleinert. 50 Minuten nach dem Gelpunkt wurde zur feinteiligen Suspension Eisessig zugegeben, bis die noch vorhandene Natronlauge neutralisiert war.
Der gebildete Polyvinylalkohol ließ sich nur schwer über einen Textilfilter abnutschen. Gegenüber den Beispielen 1 bis 10, die sich alle innerhalb etwa 5 Minuten gut filtrieren ließen, wurde hier erst innerhalb 45 bis 90 Minuten ein rieselfähiger Polyvinylalkohol mit einem Festgehalt von 33 Gew.-% erhalten.

Nach dem Trocknen wurde ein Polyvinylalkohol mit einer Verseifungszahl von 135 mg KOH / g PVAL und einer Viskosität bestimmt nach Methode Höppler von 4.05 mPas (4 Gew.-%-ig in Wasser) erhalten.
Das Filtrat enthielt 75.5 Gew.-% Methanol und 24.5 Gew.-% Methylacetat.

### Vergleichsbeispiel 3:

### (Neutralisation mit Essigsäure)

In einer 3 Liter Laborapparatur wurden 611 g einer 62 Gew.-%-igen Polyvinylacetatlösung (Viskosität bestimmt nach Methode Höppler = 4.3 mPas, 10 %-ig in Ethylacetat) mit 320 g Methanol, 335 g Methylacetat und 3 g Wasser verrührt. Die homogenisierte Lösung wurde dann mit 183 g Methanol bei stehendem Rührer überschichtet. Dann wurden 82 g einer 2.45 Gew.-%-igen Lösung von NaOH in Methanol zugegeben, und der Rührer wieder angestellt. Bei 30°C wurde die Lösung nach 12.5 Minuten dick und das gebildete Gel wurde durch Hochstellen der Rührerdrehzahl zerkleinert. 42 Minuten nach dem Gelpunkt wurde zur feinteiligen Suspension Eisessig zugegeben, bis die noch vorhandene Natronlauge neutralisiert war. Der gebildete PVAL ließ sich sehr gut über einen Textilfilter abnutschen. Innerhalb von 5 Minuten wurde ein rieselfähiger Polyvinylalkohol mit einem Festgehalt von 36 Gew.-% erhalten.
Nach dem Trocknen wurde ein Polyvinylalkohol mit einer Verseifungszahl von 144 mg KOH / g PVAL und einer Viskosität bestimmt nach Methode Höppler von 4.15 mPas (4 Gew.-%-ig in Wasser) erhalten.
Das Filtrat wurde aufgefangen, analysiert und in einem Folgeansatz (Vergleichsbeispiel 4) eingesetzt.

### Vergleichsbeispiel 4:

### (Filtrat aus Ansatz mit Essigsäure-Neutralisation)

Es wurde analog Vergleichsbeispiel 2 vorgegangen mit dem Unterschied, dass anstelle von Methanol und Methylacetat die angegebenen Mengen an Filtrat aus V.Bsp. 3 und Methylacetat eingesetzt wurden.

Die Versuchsergebnisse der Vergleichsbeispiele 2 bis 4 sind in Tabelle 5 aufgelistet.
In Vergleichsbeispiel 2 wird gezeigt, dass ohne Methylacetat-Zugabe vor der Umesterung nur schlecht filtrierbare Suspensionen resultieren. Die Filtrierzeit multiplizierte sich um den Faktor 10 bis 20 gegenüber den Beispielen 1 bis 10.
In Vergleichsbeispiel 3 wird zur Neutralisation Essigsäure verwendet.
Vergleichsbeispiel 4 zeigt, dass sich das Filtrat aus Vergleichsbeispiel 3 nicht wie bevorzugt in Folgeansätzen wiederverwenden lässt. Im Folgeansatz (=V.Bsp. 4) würde aufgrund des gebildeten Acetatpuffers, der in Methanol gut löslich ist, eine größere Laugemenge benötigt werden, welche sich von Folgeansatz zu Folgeansatz steigern würde. Dadurch würden sich die Salzanteile der erhaltenen Polyvinylalkohole deutlich erhöhen.

**Tabelle 4:**

| V.Bsp. | MeOH:MeAc Filtrat [Gew%] | Filtrat [g] | MeOH [g] | MeAc [g] | GP [min] | N nach GP [min] | VZ PVAL [mg KOH/g] |
|---|---|---|---|---|---|---|---|
| 2 | | | 655 | | 31 | 50 | 135 |
| 3 | | | 320 | 335 | 12.5 | 42 | 144 |
| 4 | 50.5:49.5 | 640 | 0 | 15 | 70 | 210 | 380 |

## Patentansprüche

1. Verfahren zur Herstellung von Polyvinylalkohol mittels katalytischer Umesterung einer alkoholischen Polyvinylester-Lösung und anschließender Aufarbeitung mittels Abtrennung des dabei gebildeten Polyvinylalkohols, **dadurch gekennzeichnet, dass**
a) vor Beginn der Umesterung der Polyvinylester-Lösung der Essigsäureester des Alkohols, der als Lösungsmittel eingesetzt wird, in einer solchen Menge zugegeben wird, dass dessen Gehalt 5 bis 70 Gew.-%, bezogen auf die Gesamtmenge aus alkoholischem Lösungsmittel und dessen Essigsäureester, beträgt, und
b) der bei der Umesterung gebildete Polyvinylalkohol von der flüssigen Phase abgetrennt wird, und die flüssige Phase in solchen Anteilen zur Umesterung zurückgeführt wird, dass der Essigsäureester-Anteil im Alkohol/Essigsäureester-Gemisch bei der Umesterung im obengenannten Bereich bleibt.

2. Verfahren nach Anspruch 1, **dadurch gekennzeichnet, dass** die Umesterung diskontinuierlich oder kontinuierlich durchgeführt wird.

3. Verfahren nach Anspruch 1 bis 2, **dadurch gekennzeichnet, dass** die Zugabe von Essigsäureester in Form eines Alkohol/Essigsäureester-Gemisches erfolgt, welches bei der Aufarbeitung des Endproduktes erhalten und abgetrennt wurde.

4. Verfahren nach Anspruch 3, **dadurch gekennzeichnet, dass** 10 bis 90 Gew.-% des bei der Aufarbeitung abgetrennten Gemisches bei der Umesterung wiederverwendet werden.

5. Verfahren nach Anspruch 1 bis 4, **dadurch gekennzeichnet, dass** als Polyvinylester Homo- und Misch-Polymerisate mit Vinylestern von aliphatischen Carbonsäuren mit 1 bis 12 C-Atomen eingesetzt werden.

6. Verfahren nach Anspruch 5, **dadurch gekennzeichnet, dass** als Polyvinylester Polyvinylacetat eingesetzt wird.

7. Verfahren nach Anspruch 1 bis 6, **dadurch gekennzeichnet, dass** als alkoholisches Lösungsmittel einwertige, aliphatische Alkohole mit 1 bis 4 C-Atomen verwendet werden.

8. Verfahren nach Anspruch 7, **dadurch gekennzeichnet, dass** als alkoholisches Lösungsmittel Methanol und als Essigsäureester Methylacetat eingesetzt werden.

9. Verfahren nach Anspruch 1 bis 8, **dadurch gekennzeichnet, dass** als Katalysatoren saure oder alkalische Katalysatoren eingesetzt werden.

10. Verfahren nach Anspruch 9, **dadurch gekennzeichnet, dass** als Katalysatoren Hydroxide, Alkoholate oder Carbonate von Alkali- und Erdalkalimetallen eingesetzt werden.

11. Verfahren nach Anspruch 10, **dadurch gekennzeichnet, dass** die Umesterung durch Zugabe von Carbonsäuren oder Mineralsäuren mit einem pKs-Wert von kleiner 4.5 abgebrochen wird.

## Claims

1. Process for preparing polyvinyl alcohol by means of catalytic transesterification of an alcoholic polyvinyl ester solution and subsequent workup by means of isolation of the polyvinyl alcohol formed, **characterized in that**
a) before beginning the transesterification of the polyvinyl ester solution, the acetic ester of the alcohol used as solvent is added in an amount of from 5 to 70% by weight, based on the overall amount of alcoholic solvent and its acetic ester, and
b) the process as claimed in claim 1, wherein the polyvinyl alcohol formed in the transesterification is isolated from the liquid phase and the liquid phase is recycled to the transesterification in amounts such that the acetic ester fraction in the alcohol/acetic ester mixture remains within the abovementioned range during the transesterification.

2. Process according to Claim 1, **characterized in that** the transesterification is conducted batchwise or continuously.

3. Process according to Claim 1 or 2, **characterized in that** acetic ester is added in the form of an alcohol/acetic ester mixture which was obtained during the workup of the end product and isolated.

4. Process according to Claim 3, **characterized in that** from 10 to 90% by weight of the mixture isolated during workup are reused in the transesterification.

5. Process according to any of Claims 1 to 4, **characterized in that** said polyvinyl ester comprises homopolymers and copolymers with vinyl esters of aliphatic carboxylic acids having from 1 to 12 carbon atoms.

6. Process according to Claim 5, **characterized in that** said polyvinyl ester comprises polyvinyl acetate.

7. Process according to any of Claims 1 to 6, **characterized in that** said alcoholic solvent comprises monohydric aliphatic alcohols having from 1 to 4 carbon atoms.

8. Process according to Claim 7, **characterized in that** said alcoholic solvent comprises methanol and said acetic ester comprises methyl acetate.

9. Process according to any of Claims 1 to 8, **characterized in that** the catalysts comprise acidic or alkaline catalysts.

10. Process according to Claim 9, **characterized in that** said catalysts comprise hydroxides, alkoxides or carbonates of alkali metals and alkaline earth metals.

11. Process according to Claim 10, **characterized in that** the transesterification is terminated by adding carboxylic acids or mineral acids having a pKₐ of less than 4.5.

## Revendications

1. Procédé pour la préparation de poly(alcool vinylique) par transestérification catalytique d'une solution alcoolique de poly(ester de vinyle) et traitement consécutif par séparation du poly(alcool vinylique) ainsi formé, **caractérisé en ce que**
a) on ajoute, avant le début de la transestérification de la solution de poly(ester de vinyle), de l'ester de l'acide acétique de l'alcool, qui est utilisé comme solvant, en une quantité telle que cette teneur est de 5 à 70% en poids par rapport à la quantité totale de solvant alcoolique et de son ester de l'acide acétique et
b) le poly(alcool vinylique) formé lors de la transestérification est séparé de la phase liquide et la phase liquide est recyclée dans la transestérification en des proportions telles que la proportion d'ester de l'acide acétique dans le mélange alcool/ester de l'acide acétique reste dans la plage susmentionnée lors de la transestérification.

2. Procédé selon la revendication 1, **caractérisé en ce que** la transestérification est réalisée de manière discontinue ou continue.

3. Procédé selon les revendications 1 à 2, **caractérisé en ce que** l'addition de l'ester de l'acide acétique est réalisée sous forme d'un mélange alcool/ester de l'acide acétique qui a été obtenu et séparé lors du traitement du produit fini.

4. Procédé selon la revendication 3, **caractérisé en ce que** 10 à 90% en poids du mélange séparé lors du traitement est réutilisé lors de la transestérification.

5. Procédé selon les revendications 1 à 4, **caractérisé en ce qu'**on utilise des homopolymères et des copolymères avec des esters vinyliques d'acides carboxyliques aliphatiques comprenant 1 à 12 atomes de carbone comme poly(ester de vinyle).

6. Procédé selon la revendication 5, **caractérisé en ce qu'**on utilise du poly(acétate de vinyle) comme poly(ester de vinyle).

7. Procédé selon les revendications 1 à 6, **caractérisé en ce qu'**on utilise des alcools monovalents aliphatiques comprenant 1 à 4 atomes de carbone comme solvant alcoolique.

8. Procédé selon la revendication 7, **caractérisé en ce qu'**on utilise du méthanol comme solvant alcoolique et de l'acétate de méthyle comme ester de l'acide acétique.

9. Procédé selon les revendications 1 à 8, **caractérisé en ce qu'**on utilise des catalyseurs acides ou alcalins comme catalyseurs.

10. Procédé selon la revendication 9, **caractérisé en ce qu'**on utilise des hydroxydes, des alcoolates ou des carbonates de métaux alcalins et alcalino-terreux comme catalyseurs.

11. Procédé selon la revendication 10, **caractérisé en ce que** la transestérification est interrompue par addition d'acides carboxyliques ou d'acides minéraux avec une valeur pKs inférieure à 4,5.
